# EUROPEAN PATENT SPECIFICATION

(11) **EP 3 851 783 B1**
(45) Date of publication and mention of the grant of the patent: **28.08.2024**
(21) Application number: 21151262.9
(22) Date of filing: 13.01.2021
(51) Int. Cl.: F41F 3/06

(54) **ACCOMMODATION AND DEPLOYMENT DEVICE FOR PAYLOADS ON A FLYING MACHINE**
AUFNAHME- UND AUSBRINGUNGSVORRICHTUNG FÜR NUTZLASTEN AN EINER FLUGMASCHINE
DISPOSITIF D'HÉBERGEMENT ET DE DÉPLOIEMENT DE CHARGES UTILES SUR UNE MACHINE VOLANTE

(30) Priority: 14.01.2020 DE 202020100183 U
(43) Date of publication of application: 21.07.2021
(73) Proprietor: Airbus Defence and Space GmbH, 82024 Taufkirchen (DE)
(72) Inventor: Schlüter, Ralf, 82024 Taufkirchen (DE)
(74) Representative: LKGLOBAL Lorenz & Kopf Patentanwalt Attorney at Law PartG mbB

(56) References cited:
- GB-A- 2 077 678
- US-A- 2 937 573
- US-A- 3 026 773
- US-A- 4 106 389
- US-A1- 2003 192 992

## Description

Various embodiments generally relate to a device for accommodating and deploying payloads on a flying machine.

Today's dropped and launched payloads or ammunition are carried either on external payload carriers or weapon carriers or in internal, large-scale weapons bays on the aircraft. In the first case, the carrying devices and payloads, such as weapons, constitute an aerodynamic and radar signature-related deterioration of the aircraft or flying machine. In the case of today's weapons bays, the aerodynamic and radar signature-related disadvantage is removed as long as the bays remain closed. When opening the weapons bays, however, the disadvantages described above also occur. Opening the bays also delays the deployment of weapons. The carrying and launching systems available today do not usually offer the possibility of launching weapons which are integrated into the aerodynamics and radar signatures with the same short time delay as weapons mounted on external load carriers.

US 3 026 773 A describes an apparatus for launching rockets from aircraft comprising a plurality of elongated panel-like access doors nominally forming part of the envelope of a generally conical, forwardly tapering section of the aircraft and tractable means in the airplane envelope exposing the forward ends of said doors within the aircraft envelope at the forward ends thereof.

US 2 937 573 A describes a bombing arrangement for an aircraft, said aircraft having a fuselage and a bomb bay disposed in the lower portion of said fuselage substantially along a vertical plane passing through the centerline of said aircraft, said fuselage having a lower wall surface, a bomb bay door capable of carrying bombs, closely fitted in said bomb bay and having a lower wall complementary to the contour of and abutting said lower wall surface of said fuselage, means pivotally supporting a forward portion of said door from a point forward of the forward end of said door, and above said lower fuselage wall surface, means for lowering the aft end of said door when bombs are to be dispersed therefrom.

US 2003/192992 A1 describes a radial sonobuoy launch system comprising a clam-shell launch tube and method for launching a sonobuoy. The clam-shell launch tube radially releases a sonobuoy and the clam-shell launch tube is reloaded during flight. The sonobuoys are pneumatically ejected about parallel to the airstream. A pressure boundary structure, having a door and a gate, maintains cabin pressure during reloading and launching. Support arms and drive arms evenly distribute the ejection accelerations from the firing mechanism and guide the trajectory of the sonobuoy during release. A clam-shell launch tube is capable of launching a multitude of differently sized sonobuoys.

GB 2 077 678 A describes a device for carrying under aircraft multiple loads disposed at variable distances between centres. A variation in the distances between centres of the loads is obtained by rotating the load supports about longitudinal axes by means of bearings incorporated in the frame structure of said carrier device.

US 4 106 389 A describes an aircraft having a fuselage with a forward cockpit, an aft mounted fin, and an upper deck extending between the two, there being a weapon launcher assembly of elongated form with a forward end through which rocket propelled weapons are launched, a rearward end through which rocket exhaust is dissipated, and an upper deck extending between the two, the launcher being pivotable between a stowed position wherein it lies with its upper deck smoothly continuous with the upper deck of the fuselage and an extended weapon launch position wherein the weapons can be launched clear of the forward cockpit.

On this basis, it is the object of the invention to provide an accommodation and deployment device for flying machines which improves the above disadvantages.

This object is achieved with a device with the features of claim 1 as well as a system with the features of Claim 10. Exemplary embodiments are presented in the dependent claims.

The object is achieved by a device for accommodating and deploying at least one payload on an aircraft. According to the invention, the device has at least one housing, wherein the housing has at least two opposite first side surfaces. The two opposite side surfaces extend over at least a partial region of the length of a payload to be accommodated. The payload to be accommodated is removably held between the first two side surfaces of the housing. The housing is at least partially arranged in a cavity on an outer surface of a flying machine. The cavity has at least one externally open first opening. The housing can be at least partially moved out of the cavity for launching and/or receiving the payload to be accommodated. According to the invention, at least one of the side surfaces has at least one closable pressure relief opening. According to the invention, the housing has a rail-guided accommodation device arranged on the first side surfaces, wherein at least one payload to be accommodated is removably held at least on two sides by the accommodation device.

The invention is based on the idea of providing an accommodation and deployment device, which may also be referred to as a carrying and deploying device, for a flying machine or aircraft in which the payload can be deployed without significantly influencing the radar signature of the aircraft. For this purpose, the launching device has a housing, hereinafter also referred to as a tunnel launcher, which preferably forms the aerodynamic contour of the flying machine or of a fighter aircraft on one side, while the rest of the carrying and launching device is housed in the aircraft structure in cavities or weapons bays adapted to the weapon in shape and size. The housing or the tunnel launcher is used similarly to so-called drop launchers at the moment of launching of the payload or the round from the aircraft or the strake and allows the launching of the payload or the weapon using the driving force of the drive of the payload or the weapon while deflecting the exhaust jet away from the flying machine or the aircraft.

According to an embodiment of the device, the cavity has a closing device. By means of the closing device, the cavity can be sealed aerodynamically and/or in relation to radar radiation when launching or extracting the at least one payload from the housing. This has the advantage of improving the radar signature of the aircraft.

According to an embodiment of the device, the housing has at least one further side surface. The further side surface connects the two first side surfaces of the housing in the area of the lateral edge of the first side surface lying in the direction of the outer surface of the flying machine. The outer surface of the flying machine can be sealed aerodynamically and/or in relation to radar radiation by means of the further side surface of the housing when the housing is fully housed in the cavity. The first two side surfaces and the further side surface thus preferably form three side surfaces of a housing.

According to a further embodiment, the housing may have a further side surface, which at least partially connects the three side surfaces together at the end and forms a fourth side of the housing. For example, the further side surface at the end is used, when launching a payload such as a guided missile, to give this a forward-directed acceleration impulse to mitigate the short-term aerodynamic resistance of the delivery device and preferably to give a further impulse away from the trajectory of the missile.

According to the invention, at least one of the side surfaces has at least one closable pressure relief opening. The pressure relief opening can be either on one of the side surfaces or the further side surface arranged at the end. The task of the pressure relief opening is, on the one hand, to guide the exhaust gases away from the flying machine when a payload is ejected or launched, such as a guided missile. Furthermore, the pressure relief opening is used to convey an acceleration impulse to the payload to be launched.

According to the invention, the housing has a rail-guided accommodation device arranged on the first side surfaces. By means of the accommodation device, at least one payload to be accommodated is releasably held by the accommodation device at least on two sides. The accommodation device allows the payload to be accommodated and enables launching of the payload using the guidance of the rails of the accommodation device.

According to an embodiment of the device, the accommodation device is designed to accommodate a number of payloads. After releasing the payload, such as a weapon, the housing or tunnel launcher can be moved back to its strake position and another payload, for example a weapon, is fed in internally. This has the advantage that multiple payloads can be carried in the aircraft using an accommodation and deployment device.

According to an embodiment of the device, the rail-guided accommodation device has at least two retaining rails. The retaining rails are used to hold the payload preferably on two opposite side surfaces and to guide it during the launching. Preferably, the payload is designed here so that at least two opposite side surfaces of the payload have grooves or the like which correspond to the retaining rails.

According to an embodiment of the device, the retaining rail has a plurality of regularly arranged retaining elements. In order to facilitate the accommodation of the payload in the retaining rails, the retaining rails may be formed by preferably at least partially regularly arranged retaining elements or retaining blocks. The retaining elements can be guided, for example, as sliding blocks or as guide rollers. These sliding solutions are designed variably to accommodate different sized payloads.

According to an embodiment of the device, the distance between the at least two retaining rails of the rail-guided accommodation device and/or the position of the at least two retaining rails in the cavity can be controllably varied. For accommodating payloads with different sizes or diameters, the distance of the retaining rails can preferably be varied. This also has the advantage that the distance of the retaining rails can be extended, for example, to accommodate the payload.

According to an embodiment of the device, the cavity has a magazine for accommodating a plurality of payloads and the payloads contained in the magazine can be fed into the housing by means of a feed mechanism. Depending on the realization of the carrying concept, it may be possible to stow more than one payload or weapon in the bay. After releasing the payload or the weapon, the tunnel launcher can be closed back in its strake position and another internal payload or weapon can be fed in internally.

According to an embodiment of the device, the plurality of payloads can be launched sequentially or in pairs by means of the rail-guided accommodation device.

Furthermore, the object is achieved by a system with a device as described herein and a payload for accommodating and deploying by an aircraft with an elongated payload body, with at least one outer surface which has at least two elongated recesses extending over a portion of the length of the payload body. The payload can be accommodated in a previously described device.

By the accommodation and deployment device described here, substantially the same aerodynamic and radar signature-related advantages are achieved as with the use of nonspecific large weapons bays, but without having the disadvantage of delayed firing/dropping by opening a bay cover and without corresponding open covers being able to negatively affect the radar signature or the aerodynamics. At the same time, the tunnel concept allows the accommodation of existing payloads, such as weapons, without the need for specific new developments for them.

In the drawings, the same reference characters generally refer to the same parts across the different views. The drawings are not necessarily true to scale; instead, emphasis is generally placed on illustrating the principles of the invention. In the following description, various embodiments of the invention are described with reference to the following drawings, in which:
- FIG. 1: shows a first embodiment of a device for accommodation and deployment of a payload on a flying machine;
- FIG. 2: shows another embodiment of a device for accommodation and deployment of a plurality of payloads on a flying machine; and
- FIG. 3: shows a further representation of an embodiment of a device for accommodation and deployment of a plurality of payloads on a flying machine.

The following detailed description refers to the accompanying drawings, which show for explanation specific details and embodiments in which the invention can be put into practice.

The word "exemplary" is used herein with the meaning "serving as an example, case or illustration". Any embodiment or embodiment described herein as "exemplary" shall not necessarily be interpreted as preferred or advantageous over other embodiments or configurations.

In the following detailed description, reference is made to the accompanying drawings, which form part of this description and in which specific embodiments in which the invention can be executed are shown for illustrative purposes. In this respect, directional terminology such as "top", "bottom", "front", "back", etc. is used with reference to the orientation of the described figure(s). Since components of embodiments can be positioned in a number of different orientations, directional terminology is used for illustrative purposes and is in no way restrictive. It is understood that other embodiments can be used, and structural or logical changes can be made without deviating from the scope of protection of the present invention. It is understood that the characteristics of the various exemplary embodiments described herein can be combined with each other, unless specifically indicated otherwise. The following detailed description is therefore not to be taken in a restrictive sense, and the scope of protection of the present invention is defined by the attached claims.

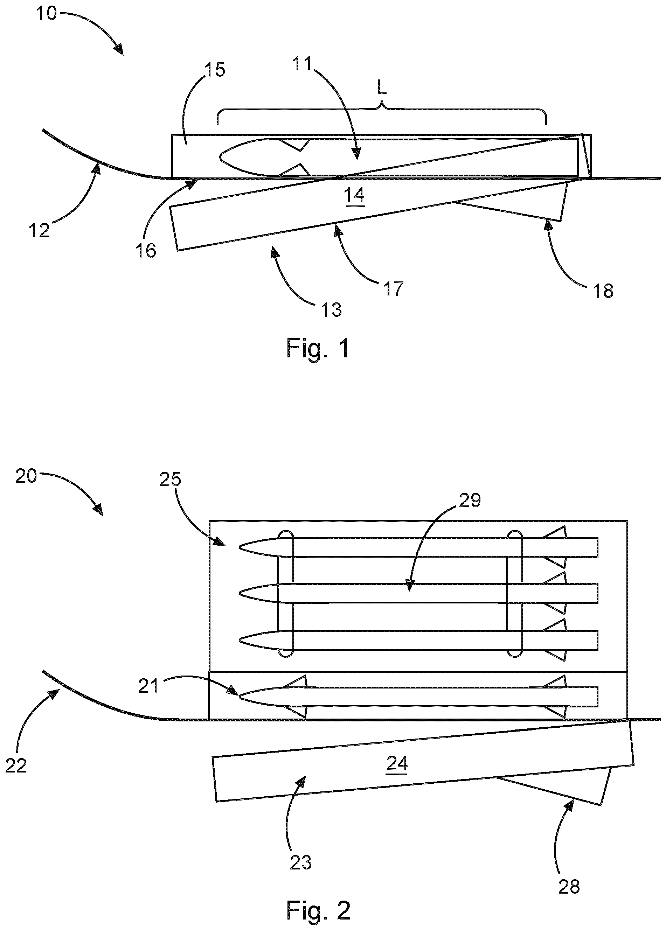

Figure 1 shows a first embodiment of a device 10 for accommodating and deploying a payload 11 on a flying machine 12. The device 10 has a housing 13 with two opposite first side surfaces 14 - in the figure only one of the two side surfaces 14 is visible due to the two-dimensional representation. The side surfaces 14 extend over at least a portion of the length L of the payload 11. In the embodiment shown in Figure 1, the payload 11 shown in the housing 13 is smaller than would be possible in principle due to the dimension. The payload 11 is detachably held between the first two side surfaces 14 of the housing 13. In a retracted state, the housing 13 is arranged in a cavity 15 on an outer surface of the flying machine 12. The cavity 15 has an externally open first opening 16. The housing 13 is at least partially movable out of the cavity 15 for deploying and/or receiving the payload 11 to be accommodated. Figure 1 also shows, in addition to the retracted state, the state of the housing 13 which is forced out or pushed out of the strake. In the embodiment of the device 10 shown in Figure 1, the housing 13 has a pressure relief opening 18 for discharging the exhaust gas jet. In this embodiment the pressure relief opening 18 is arranged on a further side surface 17 which connects the first two side surfaces 14 at the bottom.

Figure 2 shows a further embodiment of a device 20 for accommodation and deployment of a plurality of payloads 21 on a flying machine 22. A first payload 21 is arranged in the housing 23. Further payloads 21 are arranged in a magazine 29 in the cavity 25, via which the further payloads 21 can be fed into the housing 23 after deploying the first payload 21. The housing 23 also has a pressure relief opening 28 at the bottom of the side surfaces 24.

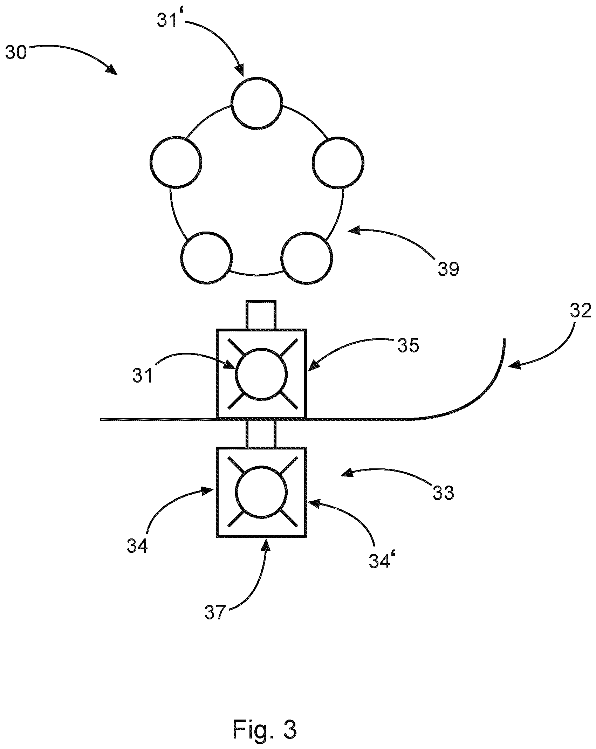

Figure 3 shows a further representation of an embodiment of a device 30 for accommodation and deployment of a plurality of payloads 31, 31` on an aircraft 32. Here the device 30 has a round magazine 39, in which further payloads 31` are arranged. The further payloads 31` can be reloaded into the housing 33 after the deployment of the first payload 31. In the embodiment of the device 30 shown in Figure 3, the housing 33 has two first side surfaces 34, 34` and a further side surface 37 connecting the first two side surfaces 34, 34'.

### Reference character list

- 10, 20, 30: Device
- 11, 21, 31, 31`: Payload
- 12, 22, 32: Flying machine (or aircraft)
- 13, 23, 33: Housing
- 14, 24, 34, 34`: First side surfaces
- 15, 25, 35: Cavity
- 16: Opening
- 17, 37: Further side surface
- 18, 28: Pressure relief opening
- 29, 39: Magazine

## Claims

1. Device (10, 20, 30) for accommodating and deploying at least one payload (11, 21, 31, 31') on a flying machine (12, 22, 32), having:
at least one housing (13, 23, 33),
wherein the housing (13, 23, 33) has at least two opposite first side surfaces (14, 24, 34, 34') which extend over at least a portion of the length (L) of a payload (11, 21, 31, 31') to be accommodated,
wherein the payload (11, 21, 31, 31') to be accommodated is releasably held between the first two side surfaces (14, 24, 34) of the housing (13, 23, 33),
wherein the housing (13, 23, 33) is at least partially arranged in a cavity (15, 25, 35) on an outer surface of a flying machine (12, 22, 32),
wherein the cavity (15, 25, 35) has at least one outwardly open first opening (16),
wherein the housing (13, 23, 33) can be at least partially moved out of the cavity (15, 25, 35) for deploying and/or receiving the payload (11, 21, 31, 31') to be accommodated,
wherein at least one of the side surfaces (14, 24, 34, 34') has at least one closable pressure relief opening (18, 28),
**characterized in that**
the housing (13, 23, 33) has a rail-guided accommodation device arranged on the first side surfaces (14, 24, 34, 34'), and
at least one payload (11, 21, 31, 31') to be accommodated is removably held at least on two sides by the accommodation device.

2. Device (10, 20, 30) according to claim 1,
wherein the cavity (15, 25, 35) has a closing device by means of which the cavity (15, 25, 35) can be sealed aerodynamically and/or in relation to radar radiation at the time of deployment or extraction of at least one payload (11, 21, 31, 31') from the housing (13, 23, 33).

3. Device (10, 20, 30) according to claim 1,
wherein the housing (13, 23, 33) has at least one further side surface (17, 37) which connects the two first side surfaces (14, 24, 34) of the housing (13, 23, 33) in the area of the side edge of the first side surfaces (14, 24, 34) located in the direction of the outer surface of the flying machine (12, 22, 32) and wherein the outer surface of the flying machine (12, 22, 32) can be sealed aerodynamically and/or in relation to radar radiation by means of the further side surface (17, 37) of the housing when the housing (13, 23, 33) is fully housed in the cavity (15, 25, 35).

4. Device according to any one of the preceding claims,
wherein the rail-guided accommodation device is designed to accommodate a plurality of payloads (11, 21, 31, 31`).

5. Device according to any one of the preceding claims,
wherein the rail-guided accommodation device has at least two retaining rails.

6. Device according to claim 5,
wherein the retaining rail has a plurality of regularly arranged retaining elements.

7. Device according to claim 6,
wherein the distance between the at least two retaining rails of the rail-guided accommodation device or the position of the at least two retaining rails in the cavity (15) can be changed controllably.

8. Device according to any one of the preceding claims,
wherein the cavity (15, 25, 35) has a magazine (29, 39) for the accommodation of a plurality of payloads (11, 21, 31, 31`) and the payloads (11, 21, 31, 31`) contained in the magazine (29, 39) can be fed into the housing (13, 23, 33) by a feed mechanism.

9. Device according to Claim 8,
wherein the plurality of payloads (11, 21, 31, 31`) can be deployed sequentially or in pairs by means of the rail-guided accommodation device.

10. A system, comprising
a device according to any one of the preceding claims, and
a payload for accommodation and deployment on a flying machine, the payload having:
an elongated payload body, with at least one outer surface which has at least two elongated recesses extending over a portion of the length of the payload body and which can be accommodated in the device according to any one of the preceding claims.

## Patentansprüche

1. Vorrichtung (10, 20, 30) zum Aufnehmen und Ausbringen mindestens einer Nutzlast (11, 21, 31, 31') an einer Flugmaschine (12, 22, 32), mit:
mindestens einem Gehäuse (13, 23, 33),
wobei das Gehäuse (13, 23, 33) mindestens zwei gegenüberliegende erste Seitenflächen (14, 24, 34, 34') aufweist, die sich über mindestens einen Abschnitt der Länge (L) einer aufzunehmenden Nutzlast (11, 21, 31, 31') erstrecken,
wobei die aufzunehmende Nutzlast (11, 21, 31, 31') lösbar zwischen den ersten zwei Seitenflächen (14, 24, 34) des Gehäuses (13, 23, 33) gehalten wird,
wobei das Gehäuse (13, 23, 33) zumindest teilweise in einem Hohlraum (15, 25, 35) an einer Außenfläche einer Flugmaschine (12, 22, 32) angeordnet ist,
wobei der Hohlraum (15, 25, 35) mindestens eine nach außen offene erste Öffnung (16) aufweist,
wobei das Gehäuse (13, 23, 33) zumindest teilweise aus dem Hohlraum (15, 25, 35) herausbewegt werden kann, um die aufzunehmende Nutzlast (11, 21, 31, 31') auszubringen und/oder aufzunehmen,
wobei mindestens eine der Seitenflächen (14, 24, 34, 34') mindestens eine verschließbare Druckentlastungsöffnung (18, 28) aufweist,
**dadurch gekennzeichnet, dass**
das Gehäuse (13, 23, 33) eine an den ersten Seitenflächen (14, 24, 34, 34') angeordnete schienengeführte Aufnahmevorrichtung aufweist, und
mindestens eine aufzunehmende Nutzlast (11, 21, 31, 31') mindestens an zwei Seiten durch die Aufnahmevorrichtung abnehmbar gehalten wird.

2. Vorrichtung (10, 20, 30) nach Anspruch 1,
wobei der Hohlraum (15, 25, 35) eine Schließvorrichtung aufweist, mit der der Hohlraum (15, 25, 35) zum Zeitpunkt der Ausbringung oder Herausnahme mindestens einer Nutzlast (11, 21, 31, 31') aus dem Gehäuse (13, 23, 33) aerodynamisch und/oder gegen Radarstrahlung abgedichtet werden kann.

3. Vorrichtung (10, 20, 30) nach Anspruch 1,
wobei das Gehäuse (13, 23, 33) mindestens eine weitere Seitenfläche (17, 37) aufweist, die die zwei ersten Seitenflächen (14, 24, 34) des Gehäuses (13, 23, 33) im Bereich der Seitenkante der ersten Seitenflächen (14, 24, 34) in Richtung der Außenfläche der Flugmaschine (12, 22, 32) verbindet, und wobei die Außenfläche der Flugmaschine (12, 22, 32) mittels der weiteren Seitenfläche (17, 37) des Gehäuses aerodynamisch und/oder gegen Radarstrahlung abgedichtet werden kann, wenn das Gehäuse (13, 23, 33) vollständig in dem Hohlraum (15, 25, 35) untergebracht ist.

4. Vorrichtung nach einem der vorhergehenden Ansprüche,
wobei die schienengeführte Aufnahmevorrichtung dazu ausgelegt ist, eine Vielzahl von Nutzlasten (11, 21, 31, 31') aufzunehmen.

5. Vorrichtung nach einem der vorhergehenden Ansprüche,
wobei die schienengeführte Aufnahmevorrichtung mindestens zwei Halteschienen aufweist.

6. Vorrichtung nach Anspruch 5,
wobei die Halteschiene eine Vielzahl von regelmäßig angeordneten Halteelementen aufweist.

7. Vorrichtung nach Anspruch 6,
wobei der Abstand zwischen den mindestens zwei Halteschienen der schienengeführten Aufnahmevorrichtung oder die Position der mindestens zwei Halteschienen im Hohlraum (15) steuerbar verändert werden kann.

8. Vorrichtung nach einem der vorhergehenden Ansprüche,
wobei der Hohlraum (15, 25, 35) ein Magazin (29, 39) zur Aufnahme einer Vielzahl von Nutzlasten (11, 21, 31, 31') aufweist und die im Magazin (29, 39) enthaltenen Nutzlasten (11, 21, 31, 31') durch einen Vorschubmechanismus in das Gehäuse (13, 23, 33) einführbar sind.

9. Vorrichtung nach Anspruch 8,
wobei die Vielzahl von Nutzlasten (11, 21, 31, 31') mittels der schienengeführten Aufnahmevorrichtung nacheinander oder paarweise ausgebracht werden können.

10. System, umfassend:
eine Vorrichtung nach einem der vorhergehenden Ansprüche, und
eine Nutzlast zur Unterbringung und Ausbringung auf einer Flugmaschine, wobei die Nutzlast Folgendes aufweist:
einen länglichen Nutzlastkörper, mit mindestens einer Außenfläche, die mindestens zwei längliche Ausnehmungen aufweist, die sich über einen Abschnitt der Länge des Nutzlastkörpers erstrecken und die in der Vorrichtung nach einem der vorhergehenden Ansprüche aufgenommen werden können.

## Revendications

1. Dispositif (10, 20, 30) d'hébergement et de déploiement d'au moins une charge utile (11, 21, 31, 31') sur une machine volante (12, 22, 32), ayant :
au moins un boîtier (13, 23, 33),
dans lequel le boîtier (13, 23, 33) a au moins deux premières surfaces latérales opposées (14, 24, 34, 34') qui s'étendent sur au moins une partie de la longueur (L) d'une charge utile (11, 21, 31, 31') à héberger,
dans lequel la charge utile (11, 21, 31, 31') à héberger est maintenue de manière amovible entre les deux premières surfaces latérales (14, 24, 34) du boîtier (13, 23, 33),
dans lequel le boîtier (13, 23, 33) est au moins partiellement agencé dans une cavité (15, 25, 35) sur une surface externe d'une machine volante (12, 22, 32),
dans lequel la cavité (15, 25, 35) a au moins une première ouverture ouverte vers l'extérieur (16),
dans lequel le boîtier (13, 23, 33) peut être retiré au moins partiellement de la cavité (15, 25, 35) pour déployer et/ou recevoir la charge utile (11, 21, 31, 31') à héberger,
dans lequel au moins l'une des surfaces latérales (14, 24, 34, 34') a au moins une ouverture de libération de pression pouvant être fermée (18, 28),
**caractérisé en ce que**
le boîtier (13, 23, 33) a un dispositif d'hébergement guidé sur rails agencé sur les premières surfaces latérales (14, 24, 34, 34'), et
au moins une charge utile (11, 21, 31, 31') à héberger est maintenue de manière amovible au moins sur deux côtés par le dispositif d'hébergement.

2. Dispositif (10, 20, 30) selon la revendication 1, dans lequel la cavité (15, 25, 35) a un dispositif de fermeture au moyen duquel la cavité (15, 25, 35) peut être scellée de manière aérodynamique et/ou en relation avec un rayonnement radar au moment du déploiement ou de l'extraction d'au moins une charge utile (11, 21, 31, 31') du boîtier (13, 23, 33).

3. Dispositif (10, 20, 30) selon la revendication 1, dans lequel le boîtier (13, 23, 33) a au moins une autre surface latérale (17, 37) qui relie les deux premières surfaces latérales (14, 24, 34) du boîtier (13, 23, 33) dans la zone du bord latéral des premières surfaces latérales (14, 24, 34) située dans la direction de la surface externe de la machine volante (12, 22, 32) et dans lequel la surface externe de la machine volante (12, 22, 32) peut être scellée de manière aérodynamique et/ou en relation avec un rayonnement radar au moyen de l'autre surface latérale (17, 37) du boîtier lorsque le boîtier (13, 23, 33) est entièrement logé dans la cavité (15, 25, 35).

4. Dispositif selon l'une quelconque des revendications précédentes,
dans lequel le dispositif d'hébergement guidé sur rails est conçu pour héberger une pluralité de charges utiles (11, 21, 31, 31').

5. Dispositif selon l'une quelconque des revendications précédentes,
dans lequel le dispositif d'hébergement guidé sur rails a au moins deux rails de retenue.

6. Dispositif selon la revendication 5,
dans lequel le rail de retenue a une pluralité d'éléments de retenue agencés régulièrement.

7. Dispositif selon la revendication 6,
dans lequel la distance entre les au moins deux rails de retenue du dispositif d'hébergement guidé sur rails ou la position des au moins deux rails de retenue dans la cavité (15) peut être modifiée de manière contrôlable.

8. Dispositif selon l'une quelconque des revendications précédentes,
dans lequel la cavité (15, 25, 35) a un chargeur (29, 39) pour l'hébergement d'une pluralité de charges utiles (11, 21, 31, 31') et les charges utiles (11, 21, 31, 31') contenues dans le chargeur (29, 39) peuvent être alimentées dans le boîtier (13, 23, 33) par un mécanisme d'alimentation.

9. Dispositif selon la revendication 8,
dans lequel la pluralité de charges utiles (11, 21, 31, 31') peuvent être déployées de manière séquentielle ou par paires au moyen du dispositif d'hébergement guidé sur rails.

10. Système, comprenant :
un dispositif selon l'une quelconque des revendications précédentes, et
une charge utile pour l'hébergement et le déploiement sur une machine volante, la charge utile ayant :
un corps de charge utile allongé, avec au moins une surface externe qui a au moins deux évidements allongés s'étendant sur une partie de la longueur du corps de charge utile et qui peut être hébergée dans le dispositif selon l'une quelconque des revendications précédentes.
